# EUROPEAN PATENT SPECIFICATION

(11) **EP 2 564 392 B1**
(45) Date of publication and mention of the grant of the patent: **18.06.2014**
(21) Application number: 11712254.9
(22) Date of filing: 05.04.2011
(51) Int. Cl.: G21C 3/07, G21C 3/324, G21C 21/00, C01B 31/36, C04B 35/565, B32B 18/00, C04B 35/80, C04B 35/628

(54) **A FUEL CHANNEL ARRANGED TO BE COMPRISED BY A FUEL ELEMENT FOR A FISSION REACTOR**
BRENNSTOFFKANAL ZUR INTEGRATION IN EIN BRENNSTOFFELEMENT FÜR EINEN KERNSPALTREAKTOR
CANAL DE COMBUSTIBLE CONÇU DE FAÇON À ÊTRE CONSTITUÉ PAR UN ÉLÉMENT COMBUSTIBLE POUR UN RÉACTEUR À FISSION

(30) Priority: 28.04.2010 US 769019
(43) Date of publication of application: 06.03.2013
(73) Proprietor: Westinghouse Electric Sweden AB, 721 63 Västerås (SE)
(72) Inventor: HALLSTADIUS, Lars, S-725 92 Västerås (SE); LAHODA, Edward J., Pittsburgh, Pennsylvania 15218-1352 (US); DAHLBÄCK, Mats, S-724 76 Västerås (SE)
(74) Representative: Berglund, Stefan
(86) International application number: PCT/EP2011/055265
(87) International publication number: WO 2011/134757

(56) References cited:
- JP-A- 2004 361 296
- US-A- 4 707 330
- US-A- 5 640 434
- US-A1- 2006 039 524

## Description

### FIELD OF THE INVENTION

The present invention relates to a fuel channel that is arranged to be comprised by a fuel element for a fission reactor according to the preamble of claim 1. Such a fuel channel is disclosed in US-4,707,330. The fuel element comprises an inlet, an outlet and a plurality of elongated fuel rods, which fuel rods each comprises a nuclear fuel and are arranged to transfer energy to a streaming medium during operation of the fission reactor. The fuel channel comprises a casing adapted to surround the fuel rods between the inlet and the outlet. The casing is adapted during operation of the fission reactor to guide the streaming medium along the fuel rods from the inlet to the outlet and be subjected to irradiation from the fuel rods.

### PRIOR ART

During operation of the fuel element in the fission reactor the function of the fuel channel is to guide the streaming medium, which in light water reactors comprises water, along the fuel rods of the fuel element. During operation the fuel channel is subjected to irradiation from the fuel rods and a chemical reactive environment from the streaming medium.

The fuel channel is usually manufactured from a zirconium alloy. Zirconium is used in fuel channels due to its low neutron cross section, good mechanical properties and a relatively high corrosion resistance. Different types of zirconium alloys are available.

In spite of the favorable properties of the zirconium alloys, fuel channels manufactured from a zirconium alloy are affected by the environment in the reactor such that the material expands. The expansion of the zirconium alloy creates a permanent deformation, for example an elongation, of the fuel channel's dimensions in relation to the fuel channels original dimensions. The expansion of the zirconium alloy arises anisotropicly, which results in that an originally straight fuel channel will bend away from its longitudinal axis.

The permanent deformation of the zirconium alloy in the fuel channel is induced by irradiation from the fuel rods and by corrosion and hydrogen pick up. The hydrogen pick up is concentrated in the form of hydrides in the zirconium alloy, which in addition to the permanent deformation also results in a weakening of the mechanical properties of the fuel channel.

Fuels channels are used in so called boiling water reactors (BWR), where the streaming medium is water that gradually is transformed from a liquid phase to a steam phase, wherein the water is guided by the fuel channel along the fuel rods.

Boiling water reactors are controlled by means of control rods that are displaced into and displaced out of positions between the fuel elements. Due to the fuel channel's great length in a boiling water reactor, even a small inhomogeneous permanent deformation of the fuel channel may create a large bending of the fuel channel. At large enough bending of the fuel channel the displacement of the reactor's control rods in the positions between the fuel elements may be obstructed by frictional contact between the control rods and the fuel channels.

US2003/0053582 presents a manufacturing method for a fuel channel consisting of a zirconium alloy.

US2007/0189952 presents a silicon carbide material comprising boron in the form of B₄C as a sintering aid, wherein the majority of the boron is boron-11. The material is adapted to be used in a fission reactor by means of that boron-11 has a lower neutron cross section than boron with a natural occurring isotopic composition of about 20% boron-10. Furthermore boron-11 forms when being influenced by neutron irradiation less gas than boron with a natural occurring isotopic composition of boron-10.

### SUMMARY OF THE INVENTION

A first object of the present invention is to provide a fuel channel with improved dimensional stability and in particular to reduce the inhomogeneous permanent deformations that result in a bending of the fuel channel. A second object of the present invention is to provide a fuel channel that has an improved corrosion resistance in comparison with fuel channels according to prior art. A third object of the present invention is to provide a fuel channel that has a useful life that exceeds the useful life of the fuel element.

These objects are obtained by the previous mentioned fuel channel that is characterized by the features of the characterizing portion of claim 1.

According to the invention the ceramic material comprises, or contains, silicon carbide and a balance of possible residual substances.

Silicon carbide, with chemical formula SiC, has properties that reduce the problem with the permanent deformation of fuel channels according to the state of the art. Silicon carbide has a low and predictable irradiation induced expansion in comparison to zirconium alloys. The irradiation induced expansion of silicon carbide is about one third of the irradiation induced expansion of zirconium alloys. Furthermore the irradiation induced expansion of silicon carbide arises mainly homogeneous in all directions, i.e. the expansion is isotropic: Thereby, the problem with bending of the fuel channel is reduced.

Silicon carbide has high corrosion resistance in comparison with zirconium alloys that are used according to the state of the art. The corrosion that still may occur on silicon carbide does not, or only to a limited extent, give rise to secondary phases in the material. Accordingly, the corrosion induced expansion is small or negligible. Thereby the problem with bending of the fuel channel is further reduced. By means of the improved properties of the fuel channel the usable life time of the fuel channel in the fission reactor is extended.

Silicon carbide has also a low neutron cross section in comparison to zirconium alloys. The primary function of the low neutron cross section is to reduce parasitic neutron absorption and thereby improve the fuel economy.

The possible residual substances of the ceramic material comprise non intended impurities and possible additives such as B₄C containing for example boron-11, graphite, a carbon compound, etcetera.

According to an embodiment of the invention said ceramic material comprises a first layer comprising fibers of silicon carbide.

By means of the silicon carbide being at least partly present in the form of fibers improves the mechanical properties of the ceramic material obtained in comparison to a homogeneous ceramic material. In particular the fibers of silicon carbide improve the fuel channel's ductility in comparison to a homogenous ceramic material. Moreover, the fibers contribute to reducing crack propagation in the ceramic material.

According to one embodiment of the invention the fibers are spun to tows. The tows of fibers increase the mechanical strength of the fuel channel.

According to an embodiment of the invention each fiber of silicon carbide has an envelope surface, wherein the envelope surfaces of the fibers or of a major part of the fibers comprising a friction reducing coating.

According to an embodiment of the invention the fibers have a length that allows the first layer to be manufactured by means of winding the fibers around a form.

The friction reducing coating on the fibers allows slippage between the fibers and between the fibers and possible surrounding material, which improves the ductility of the material. Furthermore, the slippage creates an improved strength of the fuel channel to withstand physical collisions against nearby components in the fission reactor.

According to an embodiment of the invention the friction reducing coating consists entirely or mainly of substances with a low neutron cross section. In an alternative embodiment the friction reducing coating comprises mainly boron nitride, graphite, a carbon compound, etcetera. In a preferable embodiment the coating comprises boron nitride, wherein the boron in the boron nitride has an isotopic composition of mainly boron-11 and the nitride in the boron nitride has an isotopic composition of mainly nitrogen-15.

According to an embodiment of the invention the fuel channel comprises a longitudinal axis, wherein the first layer comprises a primary layer, in which primary layer the fibers are mainly arranged along a first direction that is non-parallel with the fuel channels longitudinal axis. According to an embodiment of the invention at least some of the fibers or tows of the first layer are parallel with the fuel channel's longitudinal axis. Preferably, the first direction and the fuel channels longitudinal axis form an angle of 15 - 75 degrees.

According to an embodiment of the invention the first layer comprises a secondary layer next to the primary layer, wherein the secondary layer comprises fibers of silicon carbide, which fibers in the secondary layer are mainly arranged along a second direction that also may be non-parallel with the fuel channels longitudinal axis, wherein the first and the second direction are non-parallel. According to an embodiment of the invention at least some of the fibers or tows of the secondary layer are parallel with the fuel channel's longitudinal axis. Preferably, the second direction and the fuel channel's longitudinal axis form an angle of 15 - 75 degrees.

The fibers in the primary layer are arranged along the first direction and the fibers in the secondary layer are arranged along the second direction, wherein an improved mechanical strength of the fuel channel is obtained.

According to an embodiment of the invention the first layer comprises a filler material in a hollow space between the fibers, which filler material comprises silicon carbide, wherein the fibers and the filler material have different material structure. By means of the filler material a higher density of the first layer is obtained, wherein the fuel channels mechanical strength increases.

According to an embodiment of the invention said ceramic material comprises a second layer comprising silicon carbide, which second layer borders on at least one side of the first layer, wherein the first layer has a first density and the second layer has a second density, wherein the second density is higher than the first density. Preferably the ceramic material comprises mainly silicon carbide.

By means of the second layer that is optional, a dense layer is created on at least one side of the first layer. Thereby possible porosity is enclosed at least from one side of the first layer.

According to an embodiment of the invention the second layer comprises a first sub-layer and a second sub-layer, wherein the first sub-layer borders on a first side of the first layer and the second sub-layer borders on a second side of the first layer.

According to an embodiment of the invention the second layer forms a barrier to the streaming medium. Preferably the second layer is adapted to create a barrier to water and steam. Preferably, the barrier is impenetratable or mainly impenetratable to water and steam.

According to an embodiment of the invention the silicon carbide is treated with a dose of irradiation prior to operation in the fission reactor, wherein the dose of irradiation is such that irradiation induced permanent deformation of the casing during operation of the fission reactor is reduced.

The irradiation induced expansion of the silicon carbide material continues until a saturation level is reached, where after no or only neglectable irradiation induced expansion occurs. By means of pre-treating the silicon carbide with irradiation the possible irradiation induced expansion during operation is reduced. Thereby, the problem with permanent deformation and bending of the fuel channel is further reduced.

According to an embodiment of the invention the dose of irradiation on the silicon carbide is less than 2 nvt, preferably between 0,1 and 1 nvt. The unit "nvt" is a measure of a neutron flux that is provided to the fuel channel, where 1 nvt corresponds to 10²¹ neutron/cm² with an energy larger than 1 MeV.

According to an embodiment of the invention the fuel channel comprises one or more inner channels for guiding the streaming medium, which channels are manufactured from said ceramic material.

The inner channels may be of any geometry. The inner channel is in the same way as the casing of the fuel channels exposed to the environment in the reactor. By means of that the channel is manufactured from said ceramic material the formed permanent deformation of the channel during operation in the fission reactor is reduced.

According to an embodiment of the invention the fuel channel comprises four sides, wherein the casing comprises at least four wall sections, which wall sections are attached so that they form the sides of the casing, wherein each wall section is manufactured from said ceramic material. By means of that the casing is formed by the four wall sections the manufacturing procedure of the fuel channel is simplified.

According to an embodiment of the invention the fuel channel is adapted to be used during a time period that exceeds the usable time period of the fuel element.

By means of the fuel channel's higher resistance to irradiation and high corrosion resistance the fuel channel is usable during a longer time period in the fission reactor than the usable time period for the fuel element, i.e. the usable time period for the fuel rods of the fuel element. Thereby it is possible to reuse the fuel channel, wherein the fuel channel is used during operation of several subsequent fuel elements in the reactor. By means of such use of the fuel channel the amount of irradiated material from the reactor that requires waste disposal is reduced.

### BRIEF DESCRIPTION OF THE DRAWINGS

The invention will now be explained more closely by the description of the different embodiments of the invention and with reference to the appended figures.
Figure 1 shows a fuel element comprising a fuel channel with a casing according to an embodiment of the invention.
Figure 2 shows a cross section through the fuel element in Fig. 1.
Figure 3 shows an enlargement of a cross section through the casing of the fuel channel in the encircled area in Fig. 2.
Figure 4 shows layers of the casing of the fuel channel in Fig. 1.
Figure 5 shows an enlargement of the encircled area in Fig. 4.
Figure 6 shows fibers spun to a tow.

### DETAILED DESCRIPTION OF PREFERRED EMBODIMENTS OF THE INVENTION

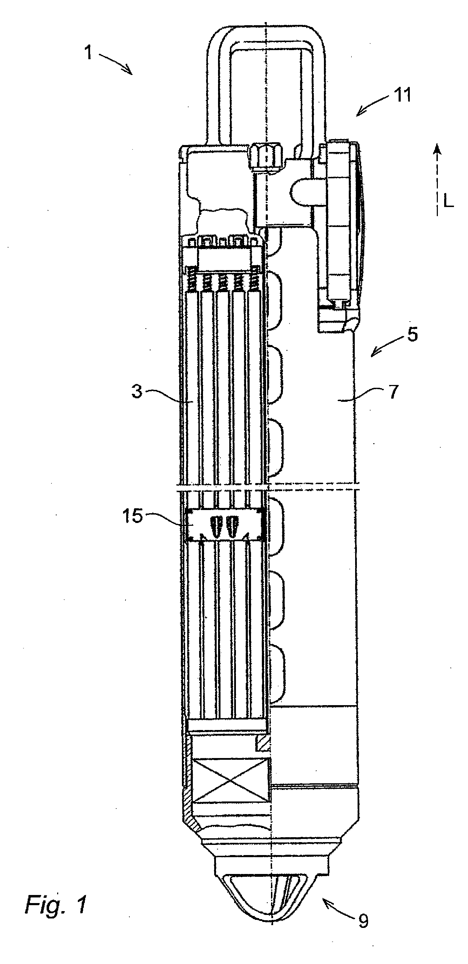

Figure 1 shows a fuel element 1 for a fission reactor. The fuel element 1 comprises a plurality of elongated fuel rods 3 surrounded by a fuel channel 5. The fuel channel 5 comprises a casing 7 that is adapted to surround the fuel rods 3 between an inlet 9 and an outlet 11 of the fuel element 1. In Figure 1 the fuel element's full length is not shown but only the upper and lower part of the fuel element 1.

The fuel rods 3 comprise a nuclear fuel, comprising enriched uranium, for instance in the form of uranium oxide (UO₂) adapted to generate energy that is transferred to a streaming medium around the fuel rods 3. The streaming medium is present in liquid or gas form. In conventional fission reactors the streaming medium is water. In boiling water reactors (BWR) and pressure water reactor (PWR) the streaming medium is water, which acts both as a cooling medium and a moderating medium. The in Figure 1 disclosed embodiment relates to a boiling water reactor. In boiling water reactors, it is necessary to guide the streaming medium along the fuel rods. Also in other types of fission reactors, the use of a fuel channel 5 is favourable. For example the fuel channel 5 may be used in pressure water reactors in order to prevent cross flow of the streaming medium between neighbouring fuel elements 1.

The function of the casing 7 of the fuel channel 5 is to guide the streaming medium along the fuel rods 3 from the inlet 9 to the outlet 11 of the fuel element 1. The fuel channel 5 is elongated and has a longitudinal axis L that is mainly parallel with a longitudinal axis of the fuel rods 3. The casing 7 comprises four sides that extends along the fuel rods 3 and are directed away from the fuel rods 3. The fuel channel 5 has an upper and a lower opening, and a passage between the upper and lower opening. During assembling of the fuel element 1, the casing 7 of the fuel channel 5 is pushed outside the fuel rods 3 by means of a displacing movement towards the fuel element 1. Vice versa, the casing 7 of the fuel channel 5 is removable from the fuel rods 3 by means of a displacing movement away from the fuel element 1.

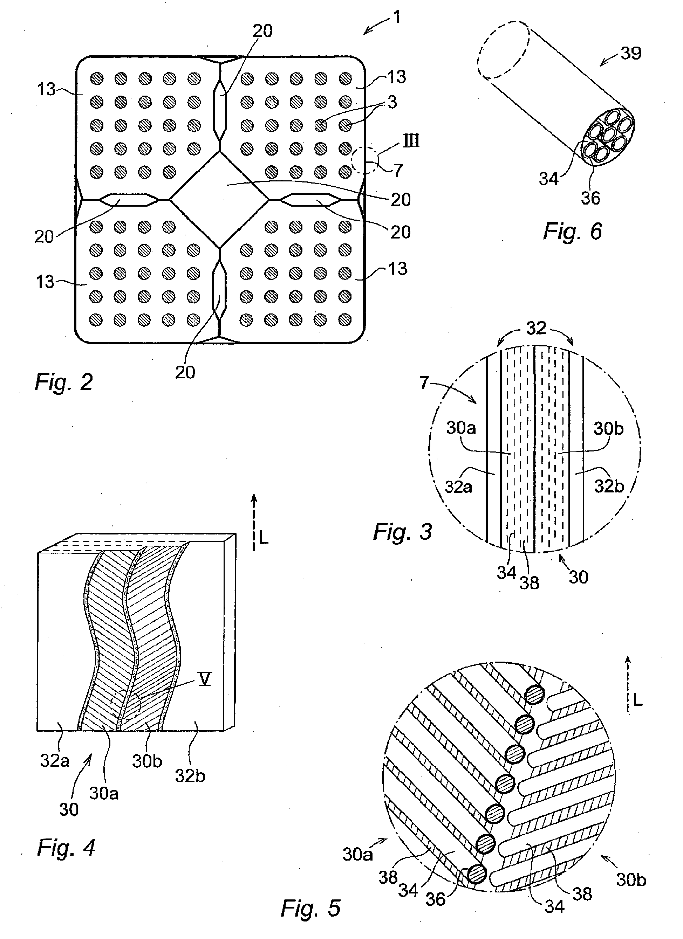

Figure 2 shows a cross section of the fuel element 1 in Figure 1. The casing 7 of the fuel channel 5 is illustrated with the solid line.

The fuel element 1 comprises in the shown embodiment four groups of fuel rods 3, so called fuel bundles 13. The fuel rods 3 in each of the fuel bundle 13 are kept together in certain position by means of a plurality of spacer elements, so called spacer grids 15, positioned along the length of the fuel rods 3, see Figure 1. The casing 7 of the fuel channel 5 surrounds the four fuel bundles 13. Thereby, the fuel channel 5 guides the streaming medium separately around the fuel rod 3 for each of the fuel bundles 13.

In the present embodiment, the casing 7 of the fuel channel 5 forms five inner channels 20 for guiding a part of the streaming medium separately from the fuel rods 3 in the four fuel bundles 13. However, in alternative embodiments, the casing 7 comprises one or more inner channels 20 in a different configuration. The five inner channels 20 are placed in a cross formed pattern viewed from a cross section of the fuel element 1. One of the inner channels 20 is placed in the center of the cross section of the fuel element 1. The other four inner channels 20 are placed between neighbouring pairs of the four fuel bundles 13.

The function of the inner channels 20 is to guide a part of the streaming medium separately from the streaming medium that surrounds the fuel rods 3. In boiling water reactors the water around the fuel rods 3, during receiving energy from the fuel rods 3, is gradually transforming from a liquid phase to a steam phase from the inlet 9 to the outlet 11 of the fuel element 1. The steam phase provides a lower degree of moderation than the liquid phase. By means of guiding the water in liquid phase in the inner channels 20 the moderation of the fission process is increased where the steam phase is present around the fuel rods 3. Thereby, a more uniform moderation of the fission process along the fuel rods 3 is obtained.

Figure 3 shows the structure of the casing 7 of the fuel channel 5 by means of a detailed view of the encircled area in Figure 2. The casing 7 is manufactured from a ceramic material.

The ceramic material consists of more than 90 weight percent silicon carbide and a balance of possible residual substances. The ceramic material comprises a first layer 30 and a second layer 32. In a preferable embodiment each of the first layer 30 and the second layer 32 has a thickness between 0,1 and 3 mm, preferably between 0,5 mm and 1,5 mm.

Even though the ceramic material in the present embodiment of the invention comprises the first layer 30 and the second layer 32, it shall be noted that only the first layer 30 will be sufficient for the function of the fuel channel 5. However, the use of the second layer 32 will improve the strength of the fuel channel 5.

The first layer 30 is constructed by fibers 34 of silicon carbide. Preferably, the fibers 34 are spun to tows 39, see Figure 6 that shows a schematic structure of an example of a tow 39. Each tow is a collection of between 200 and 2000 individual fibers 34 of silicon carbide.

Each fiber 34 has an envelope surface. The envelope surface is coated with a friction reducing coating 36, see Figure 5. The friction reducing coating 36 increases the ductility of the first layer 30 by allowing slippage between the fibers 34 or tows 39 and between the fibers 34 or tows 39 and possible surrounding material. The friction reducing coating 36 is preferably a material with low neutron cross section, such as graphite, boron nitride where the boron in the boron nitride has an isotopic composition of mainly boron-11 and the nitride in the boron nitride has an isotopic composition of mainly nitrogen-15, etcetera. Preferably the fibers 34 of silicon carbide have a diameter between 1 and 20 µm.

The first layer 30 is preferably formed by winding the fibers 34 or tows 39 of silicon carbide around a form, such as a form of graphite. By means of winding the fibers 34 or tows 39 around the form the four sides of the casing 7 of the fuel channel 5 is formed. The form gives the size of the upper and lower opening, and the passage between the upper and lower opening. Thus, the fibers 34 or tows 39 of silicon carbide have a length that admits the fibers 34 or tows 39 to be wound around the form. Alternatively, flat sheets of ceramic material are manufactured by means of that the fibers 34 or tows 39 are placed in the form. The flat plates are attached together to form the casing 7 of the fuel channel 5. Also plates of a ceramic material with forms arranged to be attached to the inner channels 20 can be manufactured by one or more forms.

The first layer 30 comprises a filler material 38 in a hollow space between the fibers 34 or tows 39 of silicon carbide. The filler material 38 comprises silicon carbide with a material structure that differs from the material structure of the fibers 34. By means of the filler material 38 the density of the first layer 30 is increased. Accordingly, the first layer 30 is constructed as a composite structure comprising the fibers 34 or tows 39 of silicon carbide and the filler material 38 of silicon carbide. The fibers 34 and the filler material 38 are at least partly separated from each other by the friction reducing coating 36.

In an embodiment of the invention the filler material 38 comprises silicon carbide manufactured by means of Chemical Vapor Infiltration (CVI). In an alternative embodiment the filler material 38 is manufactured by applying a silicon carbide precursor in the hollow space between the fibers 34 or tows 39 of silicon carbide. The precursor is transformed by means of a transformation process into silicon carbide. The transformation process is performed by heating the precursor to between 1000°C and 2000°C.

The first layer 30 comprises a primary layer 30a and a secondary layer 30b. The fibers 34 or tows 39 of silicon carbide in the primary layer 30a are arranged in a first direction and the fibers 34 or tows 39 of silicon carbide in the secondary layer 30b are arranged in a second direction. The first and the second direction are non-parallel, see Figures 4 and 5. In an embodiment of the invention the first layer 30 in addition to the primary layer 30a and the secondary layer 30b comprises two or more layers. It shall be noted that Figure 5 merely is a schematic drawing regarding the construction of the casing 7 of the fuel channel 5. The fibers 34 or tows 39 may be in disorder so that neighbouring fibers 34 or tows 39 cross over each other. Each of the primary layer 30a, the secondary layer 30b and possible further layers may also comprise further on each other overlapping fibers 34 or tows 39.

The optional second layer 32 is arranged so that it at least partly encloses the first layer 30. In the disclosed embodiment the second layer 32 is positioned so that it borders on one side of the primary layer 30a and on one side of the secondary layer 30b. The second layer 32 is accordingly divided in a first sub-layer 32a that borders on the primary layer 30a and a second sub-layer 32b that borders on the secondary layer 30b, as shown in Figure 3 and 4. It shall be noted that the second layer 32 may consist of merely one sub-layer that borders on either of the primary layer 30a or the secondary layer 30b.

The second layer 32 has a density that is higher than the first layer 30. Thereby the second layer 32 forms a barrier that is impenetrable for water. By means of the second layer 32 remaining porosity in the first layer 30 is enclosed. Preferably the second layer 32 comprises mainly silicon carbide without fibers 34 of silicon carbide.

In a preferable embodiment of the invention the second layer 32 is formed in connection with that the filler material 38 is applied so that the filler material 38 fills the hollow space between the fibers 34 or tows 39 of silicon carbide in the first layer 30. Accordingly the same manufacturing step is used for forming the filler material 38 of the first layer 30 and the second layer 32.

By means of the silicon carbide the dimensional stability of the fuel channel 5 is increased. The moderate permanent deformation that still may arise on the fuel channel 5 comprising the ceramic material occurs mainly homogenous and thus isotropic due to the silicon carbide's corrosion and irradiation properties. Accordingly the silicon carbide contributes in reducing the problem with bending of the fuel channel 5.

In an embodiment of the invention the silicon carbide is treated with a dose of irradiation prior to operation in the fission reactor. The irradiation of the silicon carbide provides a further reduction of the permanent deformation that may occur on the fuel channel 5 during operation in the reactor.

For example the fuel channel 5 is irradiated in its manufactured form. Alternatively, the silicon carbide is irradiated prior to or during manufacturing of the fuel channel 5. In an embodiment the silicon carbide fibers are irradiated prior to manufacturing of the fuel channel 5. In an alternative embodiment the first layer 30 followed by the second layer 32 is irradiated. In an alternative embodiment each of the primary layer 30a, the secondary layer 30b and possible further layers are irradiated during manufacturing of the first layer 30. Thereafter the second layer 32 is irradiated.

Preferably the silicon carbide is irradiated with a dose of irradiation that is less than 2 nvt, where 1 nvt corresponds to 10²¹ neutron/cm² with an energy larger than 1 MeV. Preferably, the silicon carbide component is irradiated with a dose of irradiation between 0,1 and 1 nvt.

The invention is not limited to the disclosed embodiment but may be varied and modified within the scope of the following claims.

For example the casing 7 of the fuel channel 5 may comprise an outer casing part that forms four outer sides of the fuel channel 5 and an inner casing part that forms one or more inner channels 20. The channels 20 may be of any geometry.

The casing 7 of the fuel channel 5 may be constructed from one or more wall sections, which wall sections are manufactured from the ceramic material. The wall sections are attached to each other and form together the casing 7 of the fuel channel 5. Preferably the wall sections are plane or mainly plane. In the same manner the inner casing part may be attached together by means of appropriate formed wall sections.

## Claims

1. A fuel channel (5) that is arranged to be comprised by a fuel element (1) for a fission reactor, wherein the fuel element (1) comprises an inlet (9), an outlet (11) and a plurality of elongated fuel rods (3), which fuel rods (3) each comprises a nuclear fuel and are arranged to transfer energy to a streaming medium during operation of the fission reactor, wherein the fuel channel (5) comprises a casing (7) adapted to surround the fuel rods (3) between the inlet (9) and the outlet (11), wherein the casing (7) is adapted during operation of the fission reactor to guide the streaming medium along the fuel rods (3) from the inlet (9) to the outlet (11) and be subjected to irradiation from the fuel rods (3), wherein the casing (7) of the fuel channel (5) is manufactured from a ceramic material, **characterized in that** the ceramic material consists of more than 90 weight percent silicon carbide and a balance of possible residual substances.

2. A fuel channel (5) according to claim 1, wherein the said ceramic material comprises a first layer (30) comprising fibers (34) of silicon carbide.

3. A fuel channel (5) according to claim 2, wherein said fibers (34) are spun to tows (39).

4. A fuel channel (5) according to claim 2 or 3, wherein each of the fibers (34) of silicon carbide has an envelope surface, wherein the envelope surfaces of a major part of the fibers (34) comprising a friction reducing coating (36).

5. A fuel channel (5) according to any of claims 2-4, wherein the fuel channel (5) comprises a longitudinal axis (L), wherein the first layer (30) comprises a primary layer (30a), in which primary layer (30a) the fibers (34) are mainly arranged along a first direction.

6. A fuel channel (5) according to claim 5, wherein the first direction is non-parallel with the fuel channel's (5) longitudinal axis (L).

7. A fuel channel (5) according to any of claims 5 and 6, wherein the first layer (30) comprises a secondary layer (30b) next to the primary layer (30a), wherein the secondary layer (30b) comprises fibers (34) of silicon carbide, which fibers (34) in the secondary layer (30b) are mainly arranged along a second direction, wherein the first and the second direction are non-parallel.

8. A fuel channel (5) according to claim 7, wherein the first and the second direction are non-parallel with the fuel channel's (5) longitudinal axis (L).

9. A fuel channel (5) according to any of claims 2-8, wherein the first layer (30) comprises a filler material (38) in a hollow space between the fibers (34), which filler material (38) comprises silicon carbide, wherein the fibers (34) and the filler material (38) have different material structure.

10. A fuel channel (5) according to any of claims 2-9, wherein said ceramic material comprises a second layer (32) comprising silicon carbide, which second layer (32) borders on at least one side of the first layer (30), wherein the first layer (30) has a first density and the second layer (32) has a second density, wherein the second density is higher than the first density.

11. A fuel channel (5) according to claim 10, wherein the second layer (32) comprises a first sub-layer (32a) and a second sub-layer (32b), wherein the first sub-layer (32a) borders on a first side of the first layer (30) and the second sub-layer (32b) borders on a second side of the first layer (30).

12. A fuel channel (5) according to any of the previous claims, wherein said silicon carbide is treated with a dose of irradiation prior to operation in the fission reactor, wherein the dose of irradiation is such that irradiation induced permanent deformation of the casing (7) during operation of the fission reactor is reduced.

13. A fuel channel (5) according to claim 12, wherein the dose of irradiation of said silicon carbide is less than 2 nvt, preferably between 0,1 and 1 nvt.

14. A fuel channel (5) according to any of the previous claims, wherein the fuel channel (5) comprises one or more inner channels (20) for guiding the streaming medium, which channel (20) is manufactured from said ceramic material and may be of any geometry.

## Patentansprüche

1. Brennstoffkanal (5), der so angeordnet ist, dass er ein Brennelement (1) für einen Kernreaktor umfasst, wobei das Brennelement (1) einen Einlass (9), einen Auslass (11) und eine Mehrzahl langgestreckter Brennstäbe (3) aufweist, wobei diese Brennstäbe (3) jeweils einen Kernbrennstoff umfassen und dazu angeordnet sind, während des Betriebs des Kernreaktors Energie zu einem Strömungsmedium zu übertragen, wobei der Brennstoffkanal (5) ein Gehäuse (7) umfasst, das dazu ausgeführt ist, die Brennstäbe (3) zwischen dem Einlass (9) und dem Auslass (11) zu umschließen, wobei das Gehäuse (7) dazu ausgeführt ist, das Strömungsmedium während des Betriebs des Kernreaktors entlang den Brennstäben (3) vom Einlass (9) zum Auslass (11) zu leiten und einer Bestrahlung von den Brennstäben (3) unterzogen zu werden, wobei das Gehäuse (7) des Brennstoffkanals (5) aus einem Keramikmaterial hergestellt ist, **dadurch gekennzeichnet, dass** das Keramikmaterial aus über 90 Gewichtsprozent Siliziumkarbid und im übrigen aus möglichen Reststoffen besteht.

2. Brennstoffkanal (5) gemäß Anspruch 1, wobei das Keramikmaterial eine erste Schicht (30) umfasst, die Fasern (34) aus Siliziumkarbid umfasst.

3. Brennstoffkanal (5) gemäß Anspruch 2, wobei die Fasern (34) zu Tauen (39) gedrillt sind.

4. Brennstoffkanal (5) gemäß Anspruch 2 oder 3, wobei jede der Fasern (34) aus Siliziumkarbid eine Hülloberfläche besitzt, wobei die Hülloberflächen eines Großteils der Fasern (34) eine reibungsverringernde Beschichtung (36) aufweisen.

5. Brennstoffkanal (5) gemäß einem der Ansprüche 2-4, wobei der Brennstoffkanal (5) eine Längsachse (L) umfasst, wobei die erste Schicht (30) eine Primärschicht (30a) umfasst, in welcher Primärschicht (30a) die Fasern (34) hauptsächlich in einer ersten Richtung angeordnet sind.

6. Brennstoffkanal (5) gemäß Anspruch 5, wobei die erste Richtung nicht parallel zur Längsachse (L) des Brennstoffkanals (5) ist.

7. Brennstoffkanal (5) gemäß einem der Ansprüche 5 und 6, wobei die erste Schicht (30) eine Sekundärschicht (30b) neben der Primärschicht (30a) umfasst, wobei die Sekundärschicht (30b) Fasern (34) aus Siliziumkarbid umfasst, welche Fasern (34) in der Sekundärschicht (30b) hauptsächlich entlang einer zweiten Richtung angeordnet sind, wobei die erste und die zweite Richtung nicht parallel zueinander sind.

8. Brennstoffkanal (5) gemäß Anspruch 7, wobei die erste und die zweite Richtung nicht parallel zur Längsachse (L) des Brennstoffkanals (5) angeordnet sind.

9. Brennstoffkanal (5) gemäß einem der Ansprüche 2-8, wobei die erste Schicht (30) ein Füllmaterial (38) in einem Hohlraum zwischen den Fasern (34) umfasst, welches Füllmaterial (38) Siliziumkarbid umfasst, wobei die Fasern (34) und das Füllmaterial (38) unterschiedliche Materialstrukturen besitzen.

10. Brennstoffkanal (5) gemäß einem der Ansprüche 2-9, wobei das Keramikmaterial eine zweite Schicht (32) umfasst, die Siliziumkarbid umfasst, welche zweite Schicht (32) an wenigstens eine Seite der ersten Schicht (30) grenzt, wobei die erste Schicht (30) eine erste Dichte und die zweite Schicht (32) eine zweite Dichte aufweist, wobei die zweite Dichte höher als die erste Dichte ist.

11. Brennstoffkanal (5) gemäß Anspruch 10, wobei die zweite Schicht (32) eine erste Teilschicht (32a) und eine zweite Teilschicht (32b) umfasst, wobei die erste Teilschicht (32a) an eine erste Seite der ersten Schicht (30) angrenzt und die zweite Teilschicht (32b) an eine zweite Seite der ersten Schicht (30) angrenzt.

12. Brennstoffkanal (5) gemäß einem der vorangehenden Ansprüche, wobei das Siliziumkarbid vor dem Betrieb im Kernreaktor mit einer Bestrahlungsdosis behandelt wird, wobei die Bestrahlungsdosis so beschaffen ist, dass eine bestrahlungsinduzierte permanente Deformation des Gehäuses (7) während des Betriebs des Kernreaktors reduziert wird.

13. Brennstoffkanal (5) gemäß Anspruch 12, wobei die Bestrahlungsdosis des Siliziumkarbids kleiner als 2 nvt ist, vorzugsweise zwischen 0,1 und 1 nvt.

14. Brennstoffkanal (5) gemäß einem der vorangehenden Ansprüche, wobei der Brennstoffkanal (5) einen oder mehrere Innenkanäle (20) zur Führung des Strömungsmediums umfasst, welcher Kanal (20) aus dem Keramikmaterial gefertigt ist und eine beliebige Geometrie aufweisen kann.

## Revendications

1. Canal de combustible (5) qui est agencé pour être composé par un élément de combustible (1) pour un réacteur à fission, dans lequel l'élément de combustible (1) comprend une admission (9), un refoulement (11) et une pluralité de barres de combustible allongées (3), lesquelles barres de combustible (3) comprennent chacune un combustible nucléaire et sont agencées pour transférer de l'énergie vers un milieu en écoulement pendant le fonctionnement du réacteur à fission, dans lequel le canal de combustible (5) comprend un carter (7) adapté pour entourer les barres de combustible (3) entre l'admission (9) et le refoulement (11), dans lequel le carter (7) est adapté pendant le fonctionnement du réacteur à fission pour guider le milieu en écoulement le long des barres de combustible (3) de l'admission (9) au refoulement (11) et être soumis à une irradiation des barres de combustible (3), dans lequel le carter (7) du canal de combustible (5) est fabriqué à partir d'un matériau céramique, **caractérisé en ce que** le matériau céramique comprend plus de 90 pour cent en poids de carbure de silicium, le reste étant d'éventuelles substances résiduelles.

2. Canal de combustible (5) selon la revendication 1, dans lequel ledit matériau céramique comprend une première couche (30) comprenant des fibres (34) de carbure de silicium.

3. Canal de combustible (5) selon la revendication 2, dans lequel lesdites fibres (34) sont filées en câbles (39).

4. Canal de combustible (5) selon la revendication 2 ou 3, dans lequel chacune des fibres (34) de carbure de silicium comporte une surface d'enveloppe, dans lequel les surfaces d'enveloppe d'une majeure partie des fibres (34) comprennent un revêtement réduisant le frottement (36).

5. Canal de combustible (5) selon l'une quelconque des revendications 2 à 4, dans lequel le canal de combustible (5) comprend un axe longitudinal (L), dans lequel la première couche (30) comprend une couche primaire (30a), dans laquelle couche primaire (30a) les fibres (34) sont principalement agencées le long d'une première direction.

6. Canal de combustible (5) selon la revendication 5, dans lequel la première direction est non parallèle à l'axe longitudinal (L) du canal de combustible (5).

7. Canal de combustible (5) selon l'une quelconque des revendications 5 et 6, dans lequel la première couche (30) comprend une couche secondaire (30b) à côté de la couche primaire (30a), dans lequel la couche secondaire (30b) comprend des fibres (34) de carbure de silicium, lesquelles fibres (34) dans la couche secondaire (30b) sont principalement agencées le long d'une seconde direction, dans lequel les première et seconde directions sont non parallèles.

8. Canal de combustible (5) selon la revendication 7, dans lequel les première et seconde directions sont non parallèles à l'axe longitudinal (L) de canal de combustible (5).

9. Canal de combustible (5) selon l'une quelconque des revendications 2 à 8, dans lequel la première couche (30) comprend un matériau de remplissage (38) dans un espace creux entre les fibres (34), lequel matériau de remplissage (38) comprend du carbure de silicium, dans lequel les fibres (34) et le matériau de remplissage (38) ont des structures de matériau différentes.

10. Canal de combustible (5) selon l'une quelconque des revendications 2 à 9, dans lequel ledit matériau céramique comprend une seconde couche (32) comprenant du carbure de silicium, laquelle seconde couche (32) borde la première couche (30) sur au moins un côté, dans lequel la première couche (30) a une première densité et la seconde couche (32) a une seconde densité, dans lequel la seconde densité est supérieure à la première densité.

11. Canal de combustible (5) selon la revendication 10, dans lequel la seconde couche (32) comprend une première sous-couche (32a) et une seconde sous-couche (32b), dans lequel la première sous-couche (32a) borde la première couche (30) sur un premier côté et la seconde sous-couche (32b) borde la première couche (30) sur un second côté.

12. Canal de combustible (5) selon l'une quelconque des revendications précédentes, dans lequel ledit carbure de silicium est traité avec une dose d'irradiation avant fonctionnement dans le réacteur à fission, dans lequel la dose d'irradiation est telle que la déformation permanente induite par irradiation du carter (7) pendant le fonctionnement du réacteur à fission est réduite.

13. Canal de combustible (5) selon la revendication 12, dans lequel la dose d'irradiation dudit carbure de silicium est inférieure à 2 nvt, de préférence entre 0,1 et 1 nvt.

14. Canal de combustible (5) selon l'une quelconque des revendications précédentes, dans lequel le canal de combustible (5) comprend un ou plusieurs canaux internes (20) pour guider le milieu en écoulement, lequel canal (20) est fabriqué à partir dudit matériau céramique et peut être d'une géométrie quelconque.
